# EUROPÄISCHE PATENTSCHRIFT

(11) **EP 1 665 500 B1**
(45) Veröffentlichungstag und Bekanntmachung des Hinweises auf die Patenterteilung: **26.08.2009**
(21) Anmeldenummer: 04735729.8
(22) Anmeldetag: 02.06.2004
(51) Int. Cl.: H02K 5/14

(54) **ELEKTRISCHE MASCHINE MIT EINFACH ZU POSITIONIERENDEM BÜRSTENTRÄGER SOWIE MONTAGEVERFAHREN FÜR ELEKTRISCHE MASCHINE**
ELECTRIC MACHINE COMPRISING BRUSH HOLDER THAT CAN BE SIMPLY POSITIONED AND MOUNTING METHOD FOR ELECTRIC MACHINE
MACHINE ELECTRIQUE A PORTE-BALAIS FACILE A POSITIONNER, ET PROCEDE DE MONTAGE POUR MACHINE ELECTRIQUE

(30) Priorität: 05.09.2003 DE 10340940
(43) Veröffentlichungstag der Anmeldung: 07.06.2006
(73) Patentinhaber: ROBERT BOSCH GMBH, 70442 Stuttgart (DE)
(72) Erfinder: GUETTINGER, Joachim, 77855 Achern (DE); GABRIEL DE DIAS, Orlando, 76131 Karlsruhe (DE); DELELEE-PREHAUT, Guillaume, 71634 Ludwigsburg (DE)
(86) Internationale Anmeldenummer: PCT/DE2004/001127
(87) Internationale Veröffentlichungsnummer: WO 2005/027316

(56) Entgegenhaltungen:
- DE-U- 8 812 549
- GB-A- 2 256 536
- US-A- 4 596 941
- PATENT ABSTRACTS OF JAPAN Bd. 1998, Nr. 10, 31. August 1998 (1998-08-31) -& JP 10 136615 A (COPAL CO LTD), 22. Mai 1998 (1998-05-22)

## Beschreibung

### Stand der Technik

Die vorliegende Erfindung betrifft eine elektrische Maschine mit einem Bürstenträger, welche eine einfache und sichere Positionierung des Bürstenträgers ermöglicht. Weiterhin betrifft die vorliegende Erfindung ein Montageverfahren für einen Bürstenträger einer elektrischen Maschine.

Elektrische Maschinen sind aus dem Stand der Technik wohl bekannt. Insbesondere sind elektrische Maschinen bekannt, welche einen Bürstenträger umfassen, welcher Bürsten hält, die mit einem an der Rotorwelle angeordneten Kommutator in Kontakt stehen (siehe DE-U-88 12 549 oder JP-A-10 136 615). Um einen hohen Wirkungsgrad der elektrischen Maschine realisieren zu können, müssen die Bürsten in einer richtigen Position bezogen auf den Kommutator ausgerichtet sein. Aufgrund von Toleranzen bei der Herstellung der Einzelteile der elektrischen Maschine ist es notwendig, insbesondere den Bürstenträger relativ zum Kommutator nach der Montage auszurichten, um die Bürsten richtig zu positionieren. Die Ausrichtung des Bürstenträgers erfolgt dabei über Öffnungen, welche im Gehäuse oder im Gehäusedeckel der elektrischen Maschine vorgesehen sind, und welche nach der Ausrichtung des Bürstenträgers mittels eines kleinen Zusatzdeckels verschlossen werden. Häufig erfordern es jedoch die Einsatzgebiete der elektrischen Maschinen, dass diese wasserdicht sind. Aus diesem Grunde müssen die zur Ausrichtung des Bürstenträgers vorhandenen Öffnungen nach der Ausrichtung dicht verschlossen werden. Hierdurch ergibt sich ein zusätzliches Risiko für eine Undichtheit. Beispielsweise werden derartige wasserdichte elektrische Maschinen als Antriebe für Scheibenwischer in Fahrzeugen verwendet.

### Vorteile der Erfindung

Die erfindungsgemäße elektrische Maschine mit den Merkmalen des Patentanspruchs 1 weist demgegenüber den Vorteil auf, dass zur Ausrichtung des Bürstenträgers keine zusätzliche Öffnung im Gehäuse oder im Gehäusedeckel der elektrischen Maschine vorgesehen werden muss. Dies wird erfindungsgemäß dadurch erreicht, dass im Gehäuse und/oder im Gehäusedeckel der elektrischen Maschine ein elastischer Bereich vorgesehen ist, über welchen eine Positionierung des Bürstenträgers von der Außenseite der elektrischen Maschine möglich ist. Dadurch kann erfindungsgemäß eine im Stand der Technik für einen Zusatzdeckel zum Schließen der Ausrichtöffnung notwendige Abdichtung verzichtet werden.

Die Unteransprüche zeigen bevorzugte Weiterbildungen der Erfindung.

Der elastische Bereich zur Ausrichtung des Bürstenträgers ist vorzugsweise im Gehäusedeckel der elektrischen Maschine angeordnet.

Besonders bevorzugt ist der elastische Bereich durch ein im Gehäuse oder Gehäusedeckel befestigtes Elastomerelement gebildet. Das Elastomerelement kann hierbei vor der Montage im Gehäuse bzw. im Gehäusedeckel z.B. mittels Schweißen oder mittels eines anderen Verfahrens befestigt werden. Im unmontierten Zustand der elektrischen Maschine kann die Befestigung des Elastomerelements ohne großen Aufwand ausgeführt werden. Dadurch wird eine ausreichende Abdichtung erreicht, obwohl das Gehäuse bzw. der Gehäusedeckel das Elastomerelement als Zusatzelement aufweisen.

Das Elastomerelement ist weiter vorzugsweise eine Elastomermembran.

Gemäß einer anderen bevorzugten Ausgestaltung der vorliegenden Erfindung ist der elastische Bereich integral im Gehäuse und/oder im Gehäusedeckel gebildet. Diese Alternative hat den großen Vorteil, dass kein zusätzliches Element im Gehäuse bzw. im Gehäusedeckel vorgesehen ist, so dass eine Dichtstelle entfallen kann. Hieraus ergeben sich auch weiterhin Herstellungs- und Montagevorteile. Besonders bevorzugt ist der integral gebildete elastische Bereich durch eine wellenartige Struktur im Gehäuse bzw. im Gehäusedeckel gebildet. Hierbei wird eine ringförmige wellenartige Struktur besonders bevorzugt. Eine Ausrichtung des im Gehäuse montierten Bürstenträgers kann dann besonders einfach über den von der wellenartigen Struktur eingeschlossenen Bereich erfolgen.

Besonders bevorzugt ist die elektrische Maschine wasserdicht ausgestaltet. Dies kann beispielsweise durch Vorsehen einer Dichtung zwischen dem Gehäuse und dem Gehäusedeckel realisiert werden.

Die erfindungsgemäße elektrische Maschine wird vorzugsweise in einem Fahrzeug und insbesondere als Antrieb für elektrisch betätigte Hilfseinrichtungen, wie z.B. Scheibenwischer o.Ä., verwendet.

Gemäß dem erfindungsgemäßen Montageverfahren zur Montage eines Bürstenträgers in einer elektrischen Maschine wird zuerst der Bürstenträger in ein Gehäusebauteil eingeführt und die weiteren Bauteile der elektrischen Maschine im Gehäuse montiert. Anschließend wird das Gehäusebauteil mittels eines Gehäusedeckels verschlossen und dann wird der Bürstenträger über einen im Gehäuse oder im Gehäusedeckel ausgebildeten elastischen Bereich endgültig positioniert. Somit ermöglicht der erfindungsgemäße elastische Bereich am Gehäuse oder am Gehäusedeckel eine endgültige Positionierung des Bürstenträgers von außerhalb der elektrischen Maschine. Hierdurch kann auf ein Verschließen der ansonsten im Gehäuse vorgesehenen Öffnungen zur Positionierung des Bürstenträgers verzichtet werden. Weiterhin kann beispielsweise nach einer gewissen Anzahl von Betriebsstunden bei Bedarf eine einfache Positionierung des Bürstenträgers von außen erfolgen, falls dieser infolge des Betriebes seine Position verändert haben sollte.

Besonders bevorzugt erfolgt die endgültige Positionierung des Bürstenträgers mittels eines von außen auf das Gehäuse bzw. den Gehäusedeckel angesetzten Stempelelements.

### Zeichnung

Nachfolgend werden unter Bezugnahme auf die Begleitbezeichnung mehrere Ausführungsbeispiele der vorliegenden Erfindung im Detail beschrieben. In der Zeichnung ist:
- Figur 1: eine schematische Schnittansicht einer elektrischen Maschine gemäß einem ersten Ausführungsbeispiel der vorliegenden Erfindung,
- Figur 2: eine schematische perspektivische geschnittene Ansicht des in Figur 1 verwendeten Gehäusedeckels, und
- Figur 3: eine schematische Schnittansicht einer elektrischen Maschine gemäß einem zweiten Ausführungsbeispiel der vorliegenden Erfindung.

### Beschreibung der Ausführungsbeispiele

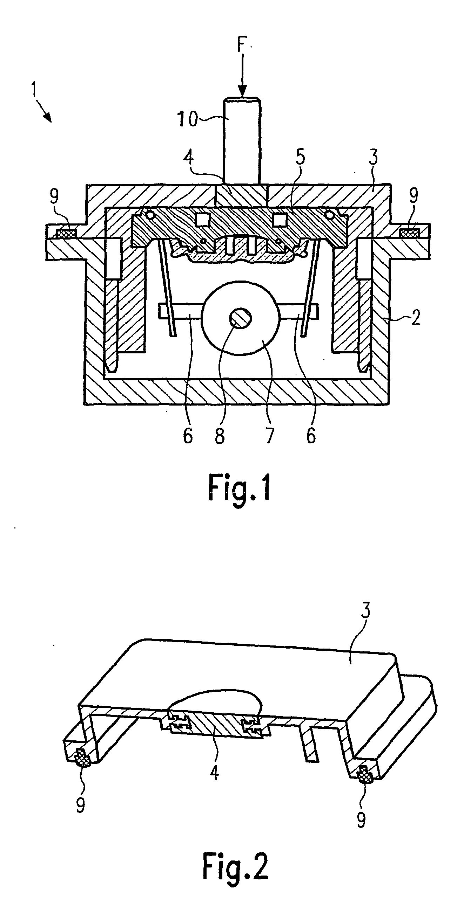

Nachfolgend wird unter Bezugnahme auf die Figuren 1 und 2 eine elektrische Maschine 1 gemäß einem ersten Ausführungsbeispiel der vorliegenden Erfindung beschrieben.

Wie in Figur 1 gezeigt, umfasst die elektrische Maschine 1 ein Gehäuse 2, einen Gehäusedeckel 3 und einen Bürstenträger 5. Der Bürstenträger 5 ist im Inneren des Gehäuses angeordnet und dient zum Halten von Bürsten 6, welche an einem Kommutator 7 anliegen. Der Kommutator 7 ist auf einer Rotorwelle 8 in bekannter Weise angeordnet. Im Gehäusedeckel 3 ist weiterhin ein Elastomerelement 4 angeordnet.

Wie aus Figur 2 ersichtlich ist, ist das Elastomerelement 4 in der Mitte des Gehäusedeckels 3 angeordnet und weist im Wesentlichen eine zylindrische Form auf. Um eine sichere Abdichtung gegenüber dem Gehäusedeckel 3 zu erreichen, ist im Außenumfang des Zylinders ein Befestigungsschlitz vorgesehen, so dass, wie in Figur 2 im Detail gezeigt, eine doppelte Abdichtung zwischen dem Elastomerelement 4 und dem Gehäusedeckel 3 realisiert wird. Zusätzlich kann das Elastomerelement 4 zur Sicherheit noch mit dem Gehäusedeckel 3 verschweißt werden. Weiterhin ist zwischen dem Gehäusedeckel 3 und dem Gehäuse eine Dichtung 9 ausgebildet. Die elektrische Maschine 1 des ersten Ausführungsbeispiels wird als Mischermotor in Fahrzeugen verwendet und muss deshalb wasserdicht ausgeführt sein.

Wie in Figur 1 angedeutet, wird nach der vollständigen Montage der elektrischen Maschine eine Ausrichtung des Bürstenträgers 10 bezüglich des Kommutators 7 durchgeführt. Hierzu wird ein Stempelelement 10, wie in Figur 1 gezeigt, von außerhalb der elektrischen Maschine 1 auf das Elastomerelement 4 geführt. Das Stempelelement 10 übt auf das Elastomerelement 4 eine vorbestimmte Kraft F aus, um eine endgültige Positionierung des Bürstenträgers 5 relativ zum Kommutator 7 zu ermöglichen. Hierdurch kann ein Ausgleich von herstellungsbedingten Toleranzen ausgeführt werden, ohne dass im Gehäuse bzw. im Gehäusedeckel eine nach der Positionierung zu verschließende Öffnung vorgesehen ist. Der Bürstenträger 5 ist dabei im Gehäuse 2 derart angeordnet, dass er in gewissem Umfang seine Position relativ zum Kommutator 7 verändern kann. Dies kann beispielsweise über eine leichte Presspassung zwischen Bürstenträger 5 und Gehäuse 2 erreicht werden.

Somit kann die erfindungsgemäße elektrische Maschine 1 auch die zur Verwendung als Wischermotor in Fahrzeugen notwendige Anforderung hinsichtlich der Wasserdichtheit erfüllen, ohne dass dadurch Qualitätseinbußen, welche aufgrund von verschiedenen Toleranzen der Einzelbauteile auftreten können, hingenommen werden müssen. Dabei ist eine endgültige Positionierung des Bürstenträgers 5 deutlich einfacher als im Vergleich mit dem Stand der Technik durchführbar.

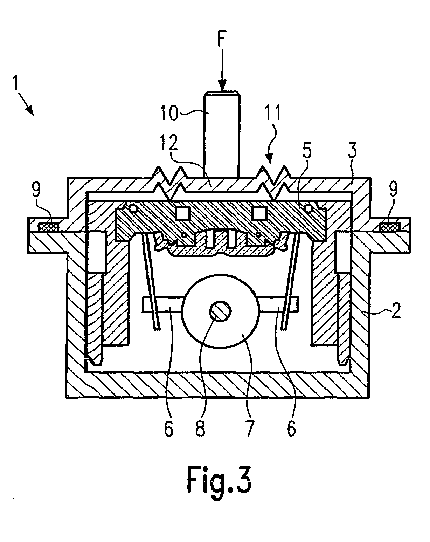

Nachfolgend wird unter Bezugnahme auf Figur 3 ein zweites Ausführungsbeispiel gemäß der vorliegenden Erfindung beschrieben. Gleiche bzw. funktional gleiche Teile sind mit den gleichen Bezugszeichen wie im ersten Ausführungsbeispiel bezeichnet.

Das zweite Ausführungsbeispiel entspricht im Wesentlichen dem ersten Ausführungsbeispiel, so dass nachfolgend nur Unterschiede im Detail beschrieben werden. Wie.aus Figur 3 ersichtlich ist, weist der Gehäusedeckel 3 an Stelle des Elastomerelements einen integral im Gehäusedeckel 3 gebildeten elastischen Bereich 11 auf. Der elastische Bereich 11 weist eine wellenartige Struktur auf und ist ringförmig gebildet. Dadurch kann, wenn, wie in Figur 3 schematisch dargestellt ist, ein Stempelelement 10 an den vom elastischen Bereich 11 umgebenen Abschnitt 12 ansetzen und mit einer vorbestimmten Kraft F den Gehäusedeckel 3 verformen. Dabei kommt das Innere des Gehäusedeckels 3 mit dem Bürstenträger 5 in Kontakt, so dass bei montiertem Gehäusedeckel 3 eine Positionierung des Bürstenträgers 5 relativ zum Gehäuse 2 und zum Kommutator 7 möglich ist. Dieses Ausführungsbeispiel hat insbesondere den Vorteil, dass der elastische Bereich 11 integral im Gehäusedeckel 3 gebildet ist. Dadurch ergeben sich keinerlei Dichtheitsprobleme. Weiterhin kann der elastische Bereich 11 auf einfache Weise bei der Herstellung des Gehäusedeckels 3 gleich mit hergestellt werden. Besonders bevorzugt ist der Gehäusedeckel 3 aus einem Kunststoffmaterial oder einem Federstahl hergestellt. Nachdem der Bürstenträger 5 in seiner Endposition ausgerichtet wurde, nimmt der Gehäusedeckel 3 nach Wegnehmen der Stempelkraft F wieder seine ursprüngliche Gestalt ein. Sollte während des Betriebes der elektrischen Maschine eine Neuausrichtung des Bürstenträgers 5 gegenüber dem Kommutator 7 notwendig sein, kann diese einfach durch Ansetzen des Stempelelements 10 an den vom elastischen Bereich umgebenen Abschnitt 12 ausgeführt werden.

Die erfindungsgemäße elektrische Maschine 1 wird vorzugsweise in Fahrzeugen verwendet, bei denen die elektrische Maschine wasserdichte Eigenschaften aufweisen kann. Beispielsweise wird die elektrische Maschine als Wischermotor für Scheibenwischer verwendet oder als Antrieb für weitere elektrisch betätigte Hilfseinrichtungen.

## Patentansprüche

1. Elektrische Maschine, umfassend einen Bürstenträger (5) zum Halten von Bürsten (6), wobei der Bürstenträger (5) in einem Gehäuse (2) angeordnet ist, wobei das Gehäuse (2) und/oder ein Gehäusedeckel (3) einen elastischen Bereich (4; 11) aufweist, welcher eine Positionierung des Bürstenträgers (5) relativ zu einem Kommutator (7) von außerhalb des Gehäuses ermöglicht.

2. Elektrische Maschine nach Anspruch 1, **dadurch gekennzeichnet, dass** der elastische Bereich (4; 11) in einem Gehäusedeckel (3) ausgebildet ist.

3. Elektrische Maschine nach einem der vorhergehenden Ansprüche, **dadurch gekennzeichnet, dass** der elastische Bereich (4) ein im Gehäuse (2) oder im Gehäusedeckel (3) befestigtes Elastomerelement ist.

4. Elektrische Maschine nach Anspruch 3, **dadurch gekennzeichnet, dass** das Elastomerelement eine Elastomermembran ist.

5. Elektrische Maschine nach Anspruch 1 oder 2, **dadurch gekennzeichnet, dass** der elastische Bereich (11) integral im Gehäuse (2) und/oder im Gehäusedeckel (3) gebildet ist.

6. Elektrische Maschine nach Anspruch 5, **dadurch gekennzeichnet, dass** der elastische Bereich (11) durch eine wellenartige Struktur gebildet ist.

7. Elektrische Maschine nach Anspruch 5 oder 6, **dadurch gekennzeichnet, dass** der elastische Bereich ringförmig ausgebildet ist und einen Positionierungsabschnitt (12) umschließt.

8. Elektrische Maschine nach einem der vorhergehenden Ansprüche, **dadurch gekennzeichnet, dass** die elektrische Maschine wasserdicht ausgebildet ist.

9. Elektrische Maschine nach einem der vorhergehenden Ansprüche, **dadurch gekennzeichnet, dass** die elektrische Maschine in einem Fahrzeug, insbesondere als Antrieb für elektrisch betätigte Hilfseinrichtungen, insbesondere als Antrieb für Scheibenwischer, verwendet wird.

10. Montageverfahren zur Montage eines Bürstenträgers (5) einer elektrischen Maschine (1), umfassend die Schritte:
- Montage des Bürstenträgers (5) in einem Gehäuse (2),
- Montage weiterer Bauteile der elektrischen Maschine im Gehäuse (2),
- Verschließen des Gehäuses (2) mit einem Gehäusedeckel (3), und
- endgültige Positionierung des Bürstenträgers (5) relativ zu einem Kommutator (7) über einen im Gehäuse (2) oder im Gehäusedeckel (3) gebildeten elastischen Bereich (4; 11) von außerhalb der elektrischen Maschine (1).

## Claims

1. Electrical machine, comprising a brush support (5) for holding brushes (6), with the brush support (5) being arranged in a housing (2), with the housing (2) and/or a housing cover (3) having an elastic region (4; 11) which allows the brush support (5) to be positioned relative to a commutator (7) from outside the housing.

2. Electrical machine according to Claim 1, **characterized in that** the elastic region (4; 11) is formed in a housing cover (3).

3. Electrical machine according to either of the preceding claims, **characterized in that** the elastic region (4) is an elastomeric element which is fixed in the housing (2) or in the housing cover (3).

4. Electrical machine according to Claim 3, **characterized in that** the elastomeric element is an elastomeric diaphragm.

5. Electrical machine according to Claim 1 or 2, **characterized in that** the elastic region (11) is integrally formed in the housing (2) and/or in the housing cover (3).

6. Electrical machine according to Claim 5, **characterized in that** the elastic region (11) is formed by a corrugated structure.

7. Electrical machine according to Claim 5 or 6, **characterized in that** the elastic region is annular and surrounds a positioning section (12).

8. Electrical machine according to one of the preceding claims, **characterized in that** the electrical machine is water-tight.

9. Electrical machine according to one of the preceding claims, **characterized in that** the electrical machine is used in a vehicle, in particular as a drive for electrically operated auxiliary devices, in particular as a drive for windscreen wipers.

10. Mounting method for mounting a brush support (5) of an electrical machine (1), comprising the steps of:
- mounting the brush support (5) in a housing (2),
- mounting further components of the electrical machine in the housing (2),
- closing the housing (2) by way of a housing cover (3), and
- final positioning of the brush support (5) relative to a commutator (7) by means of an elastic region (4; 11), which is formed in the housing (2) or in the housing cover (3), from outside the electrical machine (1).

## Revendications

1. Machine électrique qui comprend un porte-balais (5) qui retient des balais (6), le porte-balais (5) étant disposé dans un boîtier (2), le boîtier (2) et/ou un couvercle (3) du boîtier présentant une partie élastique (4 ; 11) qui permet de positionner le porte-balais (5) par rapport à un commutateur (7) depuis l'extérieur du boîtier.

2. Machine électrique selon la revendication 1, **caractérisée en ce que** la partie élastique (4 ; 11) est formée dans un couvercle (3) du boîtier.

3. Machine électrique selon l'une des revendications précédentes, **caractérisée en ce que** la partie élastique (4) est un élément en élastomère fixé dans le boîtier (2) ou dans le couvercle (3) du boîtier.

4. Machine électrique selon la revendication 3, **caractérisée en ce que** l'élément en élastomère est une membrane en élastomère.

5. Machine électrique selon les revendications 1 ou 2, **caractérisée en ce que** la partie élastique (11) est formée d'un seul tenant avec le boîtier (2) et/ou avec le couvercle (3) du boîtier.

6. Machine électrique selon la revendication 5, **caractérisée en ce que** la partie élastique (11) est formée par une structure ondulée.

7. Machine électrique selon les revendications 5 ou 6, **caractérisée en ce que** la partie élastique est de forme annulaire et entoure une partie de positionnement (12).

8. Machine électrique selon l'une des revendications précédentes, **caractérisée en ce que** la machine électrique est étanche à l'eau.

9. Machine électrique selon l'une des revendications précédentes, **caractérisée en ce que** la machine électrique est utilisée dans un véhicule, en particulier comme entraînement de dispositifs auxiliaires alimentés en électricité, et en particulier comme entraînement d'un essuie-.glace.

10. Procédé de montage d'un porte-balais (5) d'une machine électrique (1), qui comprend les étapes qui consistent à :
- monter le porte-balais (5) dans un boîtier (2),
- monter d'autres composants de la machine électrique dans le boîtier (2),
- fermer le boîtier (2) par un couvercle (3) du boîtier et
- depuis l'extérieur de la machine électrique (1), donner sa position finale au porte-balais (5) par rapport à un commutateur (7) par l'intermédiaire d'une partie élastique (4 ; 11) formée dans le boîtier (2) ou dans le couvercle (3) du boîtier.
